# EUROPÄISCHE PATENTANMELDUNG

(11) **EP 0 861 625 A2**
(43) Veröffentlichungstag der Anmeldung: **02.09.1998**
(21) Anmeldenummer: 98102520.8
(22) Anmeldetag: 13.02.1998
(51) Int. Cl.: A47J 41/00, B65D 39/12

(54) **Flüssigkeitsbehälter**

(30) Priorität: 13.02.1997 DE 29702507 U
(71) Anmelder: EMSA-Werke Wulf GmbH & Co., 48282 Emsdetten (DE)
(72) Erfinder: Horstmann, Klaus, 48485 Neuenkirchen (DE)
(74) Vertreter: Grünecker, Kinkeldey, Stockmair & Schwanhäusser Anwaltssozietät

(57) **Zusammenfassung**

Ein Flüssigkeitsbehälter, insbesondere ein Isoliergefäß, weist eine obere Öffnung und einen auf diese aufsetzbaren Verschlußdeckel auf. Im Verschlußdeckel ist ein elastisch spreizbarer Expansionsstopfen mittels einer mit diesem bewegungsverbundenen Betätigungseinrichtung zwischen einer Spreizstellung und einer Entlastungsstellung verstellbar gelagert.

Damit die Betätigungseinrichtung für den Expansionsstopfen einfach und kostengünstig herstellbar aufgebaut ist und gleichzeitig Spreizstellung und Entlastungsstellung des Expansionsstopfen bei Betätigen der Betätigungseinrichtung festgelegt sind, weist die Betätigungseinrichtung einen am Verschlußdeckel verschwenkbar gelagerten Hebel und einen mit dem Expansionsstopfen lösbar verbundenen, exzentrisch zur Lagerung des Hebels mit diesem bewegungsverbundenen Stößel auf.

## Beschreibung

Die Erfindung betrifft einen Flüssigkeitsbehälter, insbesondere ein Isoliergefäß, mit einer oberen Öffnung und einem auf diese aufsetzbaren Verschlußdeckel, in welchem ein elastisch spreizbarer Expansionsstopfen mittels einer mit diesem bewegungsverbundenen Betätigungseinrichtung zwischen einer Spreizstellung und einer Entlastungsstellung verstellbar gelagert ist.

Ein solcher Flüssigkeitsbehälter oder Isoliergefäß ist aus der DE-A-3104070 bekannt. Dieses vorbekannte Isoliergefäß ist kannenförmig mit einem seitlich von der oberen Öffnung abstehenden Ausgießer und einem gegenüberliegend zum Ausgießer an der Kanne angeformten Henkel. In dem Isoliergefäß ist in bekannter Weise ein doppelwandiger, evakuierter Glaskolben gelagert, der insbesondere eine trinkbare Flüssigkeit kühl oder warm hält. Die obere Öffnung des Isoliergefäßes ist durch einen verschwenkbar gelagerten Verschlußdeckel abdeckbar, wobei der Verschlußdeckel einen Expansionsstopfen aufweist, der durch eine schraubenförmige Betätigungseinrichtung im Deckel zwischen einer Spreizstellung und einer Entlastungsstellung verstellbar gelagert ist. In der Spreizstellung ist der elastisch spreizbare Expansionsstopfen mit einer Innenfläche des Isoliergefäßes im Bereich eines Halsabschnitts des Glaskolbens in dichtender Anlage. In der Entlastungsstellung ist der Expansionsstopfen beabstandet von der Innenfläche angeordnet und der Verschlußdeckel kann zum Öffnen der oberen Öffnung des Isoliergefäßes und zum Ausgießen der trinkbaren Flüssigkeit verschwenkt werden.

Nachteilig bei dem vorbekannten Isoliergefäß ist, daß der schraubenförmige Betätigungsmechanismus zum elastischen Spreizen des Expansionsstopfens relativ kompliziert aufgebaut ist, da er eine mit dem Expansionsstopfen verbundene Schraube, ein Gewinde innerhalb eines Teils des Verschlußdeckels, eine separate, im Verschlußdeckel verstellbar gelagerte Hülse und dergleichen aufweist. Weiterhin ist das mit dem Gewinde versehene Teil des Verschlußdeckels als Drehknauf ausgebildet, der selbst wiederum am übrigen Verschlußdeckel drehbar gelagert sein muß. Ein solcher komplexer konstruktiver Aufbau mit einer Vielzahl von Einzelteilen ist in der Herstellung aufwendig und teuer.

Als weiterer Nachteil ergibt sich, daß zwar die Entlastungsstellung des Expansionsstopfens relativ gut beim Drehen des Drehknaufs feststellbar ist. Allerdings gilt dies nicht für die Spreizstellung, da beim Drehen des Drehknaufs nur schwierig feststellbar ist, ob der Expansionsstopfen bereits ausreichend gespreizt ist und somit eine ausreichend dichte Anlage mit der Innenfläche des Isoliergefäßes hergestellt ist.

Der Erfindung liegt daher die Aufgabe zugrunde, einen Flüssigkeitsbehälter der eingangs genannten Art dahingehend zu verbessern, daß die Betätigungseinrichtung für den Expansionsstopfen vereinfacht und kostengünstig herstellbar aufgebaut ist und gleichzeitig Spreizstellung und Entlastungsstellung des Expansionsstopfen bei Betätigen der Betätigungseinrichtung festgelegt sind.

Diese Aufgabe wird im Zusammenhang mit den Merkmalen des Oberbegriffs des Anspruchs 1 dadurch gelöst, daß die Betätigungseinrichtung einen am Verschlußdeckel verschwenkbar gelagerten Hebel und einen mit dem Expansionsstopfen lösbar verbundenen, exzentrisch zur Lagerung des Hebels mit diesem bewegungsverbundenen Stößel aufweist. Eine solche Betätigungseinrichtung ist auch bei Flüssigkeitsbehältern ohne Wärmeisolierung verwendbar, d.h. bei beispielsweise Flaschen mit einfacher Wandung.

Durch Verkippen des Hebels sind dabei die Spreizstellung und die Entlastungsstellung festgelegt und die gesamte Betätigungseinrichtung ist im wesentlichen nur zweiteilig aus Hebel und Stößel aufgebaut. Der Hebel kann mit einem Ende aus dem Verschlußdeckel vorstehen, so daß durch Verschwenken dieses Endes durch einen Benutzer der Expansionsstopfen über den Stößel zwischen Spreizstellung und Entlastungsstellung verstellbar ist. Die entsprechende Lagerung für den Hebel kann am Verschlußdeckel auf dessen Außenseite oder in seinem Inneren ausgebildet sein. Der Hebel kann einarmig oder zweiarmig sein, wobei durch die relativ zur Lagerung des Hebels exzentrische Verbindung zwischen Hebel und Stößel sichergestellt ist, daß bei einem Verschwenken des Hebels der Stößel im wesentlichen vertikal bewegt wird und den Expansionsstopfen elastisch spreizt oder beispielsweise durch die Eigenelastizität des Expansionsstopfens wieder zurück in die Entlastungsstellung des Stopfens gezogen wird.

Vorzugsweise kann der Flüssigkeitsbehälter so ausgebildet sein, daß der Expansionsstopfen in seiner Spreizstellung in dichtender Anlage mit einer Innenfläche des Isoliergefäßes ist. Durch diese dichtende Anlage kann bei einem Ausführungsbeispiel der Erfindung ein Ausströmen von Flüssigkeit verhindern, wobei in der Entlastungsstellung die Flüssigkeit aus dem Behälter ausfließen kann. Bei einem weiteren Ausführungsbeispiel der Erfindung kann umgekehrt in Spreizstellung ein Ausgießen der Flüssigkeit möglich sein, während in im wesentlichen Entlastungsstellung des Expansionsstopfens durch diesen eine entsprechende Öffnung des Flüssigkeitsbehälters dicht verschlossen ist.

Besonders vorteilhaft erweist sich die Verwendung eines Expansionsstopfens mit Betätigungseinrichtung aus Hebel und Stößel bei einem als doppelwandige Isolierflasche ausgebildeten Flüssigkeitsbehälter bzw. Isoliergefäß auf derem oberen Ende ein als Schraubkappe ausgebildeter Verschlußdeckel aufschraubbar ist, wobei in der Schraubkappe eine Ausgießöffnung ausgebildet ist.

Bei solchen doppelwandigen, evakuierten Isolierflaschen sind aus der Praxis verschiedene Betätigungseinrichtungen zum Öffnen und Schließen der in der Schraubkappe ausgebildeten Ausgießöffnung bekannt. Alle diese Betätigungseinrichtungen umfassen im wesentlichen einen zentrisch in der oberen Öffnung der Isolierflasche angeordneten Teller, der durch ein Schiebeelement, einen Hebel mit zwei Rastpositionen oder einen mechanischen Flip-Flop relativ zur oberen Öffnung verstellbar ist. In einer Verschlußstellung des Tellers liegt dieser an einem ebenfalls in der Schraubkappe angeordneten Dichtring an, so daß keine Flüssigkeit durch obere Öffnung und Schraubkappe aus der Ausgießöffnung ausfließen kann. In einer Öffnungsstellung des Tellers ist dieser von seinem Dichtsitz entfernt und Flüssigkeit kann durch die Schraubkappe bis zur Ausgießöffnung fließen.

Nachteilig bei diesen vorbekannten Betätigungseinrichtungen mit Teller ist, daß die Flüssigkeit durch die Mechanik der Betätigungseinrichtung hindurchläuft und die Einrichtung nur schwer oder gar nicht zur Reinigung demontiert werden kann. Dadurch können sich bereits nach kurzer Gebrauchsdauer festgesetzte Flüssigkeitsreste beziehungsweise in der Flüssigkeit enthaltene Teilchen, wie Kaffeemehl oder Teekräuter, nur schwer oder garnicht entfernt werden. Setzen sich solche Teilchen beispielsweise zwischen Dichtring und Teller fest, ist die Dichtigkeit des Verschlusses stark beeinträchtigt.

Weiterhin weisen die verschiedenen Betätigungseinrichtungen für die Schraubkappen ähnliche Nachteile wie bei dem vorbekannten Isoliergefäß auf, in dem die Betätigungseinrichtungen relativ kompliziert aufgebaut sind und aus vielen Teilen bestehen.

Durch den erfindungsgemäßen Verschluß mit Expansionsstopfen und Betätigungseinrichtung aus Hebel und Stößel wird verhindert, daß Flüssigkeit oder Teilchen in der Flüssigkeit mit insbesondere der Betätigungseinrichtung in Berührung kommen, wobei die Flüssigkeit bei Expansionsstopfen in Entlastungsstellung direkt von der oberen Öffnung entlang des Expansionsstopfens bis zur Ausgießöffnung fließen kann. Dieser Bereich ist gut zugänglich und einfach zu reinigen.

Als weiterer Vorteil beispielsweise zu dem mechanischen Flip-Flop-Verschluß ergibt sich gemäß der Erfindung, daß immer feststellar ist, ob der Expansionsstopfen in seiner Spreizstellung oder seiner Entlastungsstellung je nach Stellung des Hebels ist. Dadurch ist bei aufgeschraubter Schraubkappe immer eindeutig feststellbar, ob der Verschluß tatsächlich verschlossen ist und somit die Isolierflasche sicher ohne Austreten von Flüssigkeit transportierbar ist.

Die erfindungsgemäße Betätigungseinrichtung für den Expansionsstopfen ist bei den oben erwähnten Isoliergefäßen mit beispielsweise evakuiertem Glaskolben, bei doppelwandigen Isolierflaschen, bei einwandigen Gefäßen und dergleichen einsetzbar, wobei in allen Fällen eine gute Abdichtung der oberen Öffnung mittels des Expansionsstopfens möglich ist. Die verschiedenen Materialien, aus denen der Flüssigkeitsbehälter herstellbar ist, sind Metall, insbesondere Stahl und Aluminium, Kunststoff und Glas, wobei diese Materialien auch in Kombination eingesetzt werden können, siehe beispielsweise ein Isoliergefäß aus Kunststoff oder Metall mit eingesetztem, evakuiertem Glaskolben.

Eine gute Abdichtung nahe zur oberen Öffnung des Flüssigkeitsbehälters wird sich insbesondere dann ergeben, wenn der Flüssigkeitsbehälter ein Außengewinde aufweist, auf das der Verschlußdeckel mit einem entsprechenden Innengewinde aufschraubbar ist, wobei gleichzeitig beim Aufschrauben des Verschlußdeckels der Expansionsstopfen in die obere Öffnung eingeführt und dann in seiner Spreizstellung im wesentlichen an der Innenfläche des Flüssigkeitsbehälters gegenüberliegend zum Gewinde in dichtender Anlage ist.

Im folgenden wird immer von einem Isoliergefäß oder einer Isolierflasche als Flüssigkeitsbehälter gesprochen, wobei allerdings nochmals darauf hingewiesen ist, daß auch Flüssigkeitsbehälter ohne Isolierung mit Expansionstopfen und erfindungsgemäßer Betätigungseinrichtung des Expansionsstopfen eingesetzt werden können.

Bei einem einfachen Ausführungsbeispiel der Erfindung kann der Hebel als einarmiger Hebel mit einem Lagerabschnitt zur Lagerung am Verschlußdeckel und mit einem Betätigungsabschnitt ausgebildet sein. Dadurch ist die Betätigungseinrichtung kompakter und benötigt weniger Platz am oder im Verschlußdeckel, beziehungsweise Schraubkappe.

Zur einfachen Lagerung des Lagerabschnitts ist dieser gabelförmig mit zwei Gabelarmen aufgebaut, welche in entsprechenden Gabelarmaufnahmen im Verschlußdeckel verschwenkbar gelagert sind.

Um direkt die Gabelarme zur Lagerung einsetzen zu können, sind diese im Querschnitt im wesentlichen kreisförmig herstellbar. Dadurch können die Gabelarme beispielsweise in entsprechenden kreisförmigen Aufnahmen im oder am Deckel gelagert werden.

Um die Lagerung der Gabelarme und die Montage der Betätigungseinrichtung weiter zu vereinfachen, können die Gabelarmaufnahmen zumindest teilkreisförmige Lagerflächen aufweisen, in denen die im Querschnitt im wesentlichen kreisförmigen Gabelarme verschwenkbar gelagert sind. Solche teilkreisförmigen Lagerflächen können zur Deckeloberseite offen sein, so daß die Gabelarme von oben in die Lagerflächen einlegbar sind.

Zur vereinfachten Verbindung von Hebel und Stößel, kann sich ein Lagerbolzen im wesentlichen senkrecht zu den Armen erstrecken und exzentrisch von diesen gehalten sein. An dem Lagerbolzen ist dann der Stößel verschwenkbar gelagert.

Eine einfache Festlegung der Spreizstellung des Expansionsstopfens kann sich ergeben, wenn der Betätigungsabschnitt des Hebels in Spreizstellung des Expansionsstopfens auf einer im wesentlichen ebenen Oberseite des Verschlußdeckels aufliegt.

In diesem Zusammenhang ist weiterhin von Vorteil, wenn die Ausgießöffnung relativ zum Hebel so angeordnet ist, daß der Betätigungsabschnitt in Spreizstellung des Expansionsstopfens die Ausgießöffnung abdecken kann.

Um ein tropffreies Ausgießen zu ermöglichen, kann der Ausgießöffnung eine durch eine Randkante des Verschlußdeckels gebildete Tropfkante zugeordnet sein.

Um das Ausgießen weiterhin zu verbessern, kann zwischen Ausgießöffnung und Tropfkante eine nach unten in Richtung Isoliergefäß geneigte Ausfließschräge angeordnet sein.

Um nicht nur durch die Ausgießöffnung Flüssigkeit beispielsweise in einen Becher aus-schütten zu können und gleichzeitig direkt aus der Ausgießöffnung trinken zu können, kann die Ausgießöffnung in einem am Verschlußdeckel angeordneten Mundstück ausgebildet sein. Dieses Mundstück kann einteilig am Verschlußdeckel angeformt oder an diesem lösbar befestigt sein.

Um eine scharfkantige Tropfkante in einfacher Weise zu erhalten, kann zumindest im Bereich der Tropfkante im Außenumfang des Verschlußdeckels eine konvex gekrümmte Nut ausgebildet sein, die einseitig in die Tropfkante übergeht.

Um die Ausgießöffnung sicher abzudecken und gleichzeitig zu ermöglichen, daß der Betätigungsmechanismus einem zusätzlich auf die Isolierflasche aufschraubbaren Becher, der die Schraubkappe abdeckt, nicht im Wege ist, kann ein freies Ende des Betätigungsabschnitts des Hebels nach unten in Richtung Isoliergefäß gekrümmt sein, die Tropfkante in Spreizstellung des Verschlußstopfens überdecken und zumindest teilweise in die Nut eingreifen. Dadurch kann gleichzeitig verhindert werden, daß bei Expansionsstopfen in Entlastungsstellung und entsprechend verschwenktem Hebel dieser so weit über den Außenumfang der Schraubkappe vorsteht, daß der Becher nicht mehr auf die Isolierflasche aufschraubbar ist.

Die Lagerflächen für die Gabelarme sind in einfacher Weise herstellbar, wenn diese seitlich zu einer Durchtrittsöffnung im Verschlußdeckel in diesem ausgebildet und nach oben zur Deckeloberseite offen sind. Durch die Durchtrittsöffnung ist der Stößel hindurchführbar, so daß weiterhin die Montage der Betätigugnseinrichtung erleichtert wird. Dadurch ist das erfindungsgemäße Isoliergefäß und insbesondere die Betätigungseinrichtung insgesamt leicht montierbar und servicefreundlich.

Bevorzugt wird benachbart zur Randkante der Deckeloberseite gegenüberliegend zur Ausgießöffnung eine Belüftungsbohrung im Deckel angeordnet sein.

Weiterhin von Vorteil ist, wenn die Durchtrittsöffnung zwischen Ausgießöffnung und Belüftungsbohrung angeordnet ist.

Um die Mechanik und die Durchtrittsöffnung sicher gegenüber dem Inneren des Isoliergefäßes und auch beim Ausgießen von Flüssigkeit gegenüber dieser abzudichten, ist bei einem Ausführungsbeispiel im Deckel ein die Durchtrittsöffnung im wesentlichen umgebender Aufnahmering für ein Anlageende des Expansionsstopfens angeordnet. In diesen Aufnahmering wird das Anlageende eingesteckt, wobei der Aufnahmering gleichzeitig als Widerlager beim elastischen Spreizen des Expansionsstopfens dient. Weiterhin ist der Expansionsstopfen mit seinem Anlageende dichtend im Anlagering angeordnet, so daß keine weiteren Dichtungen beispielsweise an der oftmals unsauberen Oberkante der Flasche oder zwischen Expansionsstopfen und Deckel notwendig sind.

Ein angenehmeres Erscheinungsbild und eine einfache Verbindung zwischen Hebel und Stößel ergibt sich, wenn der Stößel ein im Querschnitt im wesentlichen kreisförmiges, zwischen den Gabelarmen anordbares Kopfteil aufweist, in dem exzentrisch eine Lagerbohrung für den Lagerbolzen ausgebildet ist. Das Kopfteil kann dabei in seinen Abmessungen so ausgebildet sein, daß es beispielsweise gleichen Durchmesser wie die Gabelarme aufweist und eine Breite hat, die im wesentlichen dem Abstand der Gabelarme entspricht.

Zur einfachen Verbindung von Stößel und Expansionsstopfen kann der Stößel ein mit einem Zugende des Expansionsstopfen lösbar verbundenes Fußteil aufweisen. Das Fußteil kann mit dem Zugende verrastbar, verschraubbar oder in anderer Weise mit diesem verbindbar sowie einstückig mit diesem ausgebildet sein.

Ist der Expansionsstopfen schlauchförmig ausgebildet, kann das als Zugende ausgebildete, untere Ende des schlauchförmigen Stopfens direkt mit dem Fußteil des Stößels lösbar verbunden sein. Dies gilt ebenso bei Ausbildung des Expansionsstopfens als Formteil, wobei das Formteil beispielsweise auch direkt auf das Fußteil des Stößels aufschraubbar sein kann.

Eine weitere Verbindung zwischen Zugende des Expansionsstopfens und Fußteil des Stößels ist dadurch realisierbar, daß am Zugende ein lösbar mit dem Expansionsstopfen verbundener Gegenspanneinsatz angeordnet ist. Dieser Gegenspanneinsatz kann beispielsweise plattenförmig ausgebildet sein, wobei er über eine umlaufende Randnut verfügt, in die ein entsprechend ausgebildetes Zugende des Expansionsstopfens abdichtend eingreifen kann. Die Verbindung zwischen Gegenspanneinsatz und Fußteil kann durch Verschrauben oder dergleichen erfolgen. Außerdem kann der Gegenspanneinsatz auch Teil des Fußteils sein.

Um beim Verschwenken des Hebels den Stößel und damit den Expansionsstopfen korrekt relativ zum Verschlußdeckel beziehungsweise zur Verschlußkappe zu führen, kann am Stößel eine Zentriereinrichtung zum Zentrieren relativ zur Durchtrittsöffnung und/oder zum Aufnahmering angeordnet sein. Dadurch wird weiterhin sichergestellt, daß der Expansionsstopfen in seiner Spreizstellung korrekt abdichtend mit insbesondere einer Innenfläche im Halsbereich der Isolierflasche in Anlage ist.

In einem weiteren Ausführungsbeispiel der Erfindung kann der Expansionsstopfen an seinem unteren Zugende geschlossen sein und beispielsweise mit dem Stößel durch Verrasten oder anderes lösbares Verbinden in einem Inneren verbunden sein. Auf diese Weise kann beispielsweise auf den vorangehend genannten Gegenspanneinsatz verzichtet werden und der Expansionsstopfen weist keine Bodenöffnung sondern ein insgesamt geschlossenes und einteilig mit dem Stopfen ausgebildetes, vorzugsweise aus dem gleichen Material hergestelltes unteres Ende auf.

Weiterhin kann insbesondere bei dem vorangehend geschilderten Ausführungsbeispiel im wesentlichen das Zugende in Entlastungsstellung des Expansionsstopfens mit der oberen Öffnung des Flüssigkeitsbehälters in abdichtender Anlage sein und in Spreizstellung ein Fluidkanal zwischen dieser oberen Öffnung und der Ausgießöffnung im Verschlußdeckel oder im Flüssigkeitsbehälter freigegeben sein. Bei diesem Ausführungsbeispiel ist daher die obere Öffnung des Flüssigkeitsbehälters im wesentlichen in der Entlastungsstellung durch insbesondere das Zugende des Expansionsstopfens abgedichtet und in der Spreizstellung des Expansionsstopfens ist das Zugende von der oberen Öffnung entfernt und diese in Richtung Ausgießöffnung geöffnet. Dabei kann, wie bei dem weiter oben geschilderten anderen Ausführungsbeispiel der Erfindung in der Spreizstellung der Expansionsstopfen in dichtender Anlage mit einer Innenfläche des Flüssigkeitsbehälters oder in dichtender Anlage mit einer Innenfläche des Verschlußdeckels sein, wobei in dieser Spreizstellung ein Verbindungskanal zwischen oberer Öffnung und Ausgießöffnung in Verschlußdeckel oder Flüssigkeitsbehälter freigegeben ist.

Im folgenden wird ein vorteilhaftes Ausführungsbeispiel der Erfindung anhand der in der Zeichnung beigfügten Figuren näher erläutert und beschrieben.

Es zeigen:
- Figur 1: eine Seitenansicht eines Verschlußdeckels für ein Isoliergefäß;
- Figur 2: eine Draufsicht auf den Verschlußdeckel nach Figur 1;
- Figur 3: einen Schnitt entlang der Linie III-III aus Figur 2;
- Figur 4: eine auseinandergezogene Darstellung von einem Expansionsstopfen und einem Gegenspanneinsatz;
- Figur 5: eine Seitenansicht eines Hebels nach Figur 1;
- Figur 6: eine Draufsicht auf den Hebel nach Figur 5;
- Figur 7: eine Seitenansicht eines Stößels zur Verbindung mit dem Hebel nach Figuren 5 und 6, und
- Figur 8: eine Hinteransicht des Hebels nach Figur 7.

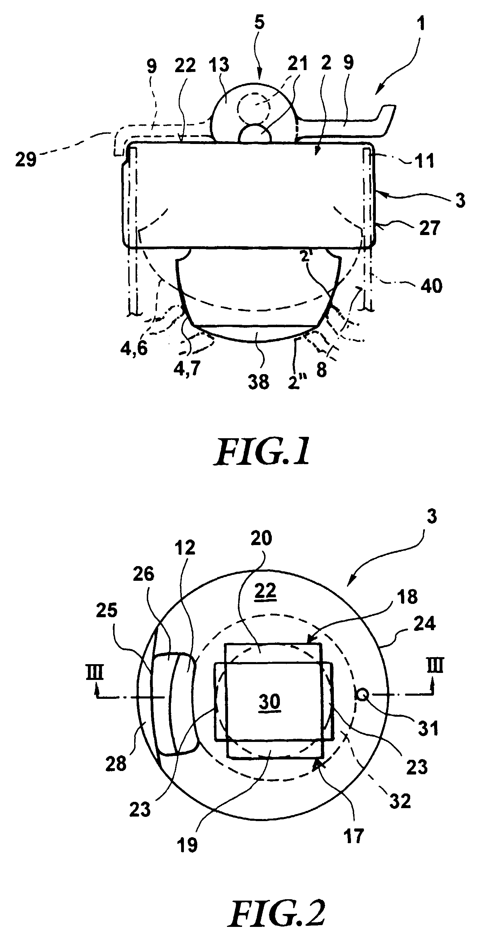

In Figur 1 ist im Prinzip ein Isoliergefäß 1 mit seinem Halsbereich 40 und einem auf eine obere Öffnung 2 des Isoliergefäßes aufgeschraubten Verschlußdeckel 3 dargestellt. Der Verschlußdeckel hat die Form einer Schraubkappe.

Das Isoliergefäß 1 ist eine doppelwandige und evakuierte Stahlflasche, von der nur der Halsbereich 40 dargestellt ist. Auf diesen und über die Schraubkappe 3 ist ein nichtdargestellter Becher in an sich bekannter Weise aufsteckbar und anschraubbar.

Die Schraubkappe 3 weist auf ihrer Unterseite einen vorstehenden Expansionsstopfen 4 auf, der in seiner Spreizstellung 6 und seiner Entlastungsstelung 7 dargestellt ist. In der Spreizstellung 6, siehe gestrichelte Linie, liegt der Expansionsstopfen 4 an einer Innenfläche 8 des Halsbereichs 40 abdichtend an.

Der Expansionsstopfen 4 ist mittels einer Betätigungseinrichtung 5 in der Schraubkappe 3 zwischen seiner Spreizstellung 6 und Entlastungsstellung 7 verstellbar gelagert. Von der Betätigungseinrichtung 5 ist in Figur 1 ein Hebel 9 sichtbar, wobei dessen gestrichelt dargestellte Position der Spreizstellung 6 des Expansionsstopfens 4 und entsprechend dessen durchgezogene Darstellung der Entlastungsstellung 7 entspricht.

Den beiden dargestellten Stellungen des Hebels 9 entspricht jeweils die Anordnung eines Bolzens 21, der in einem in der Schraubkappe 3 verschwenkbar gelagerten Lagerabschnitt 13 des Hebels 9 angeordnet ist.

Im Außenumfang der Schraubkappe 3 können nicht dargestellte Griffmulden oder ähnliches zur verbesserten Handhabung beim Drehen der Schraubkappe zum Aufschrauben auf oberes Ende 11 des Halsbereiches 40 ausgebildet sein.

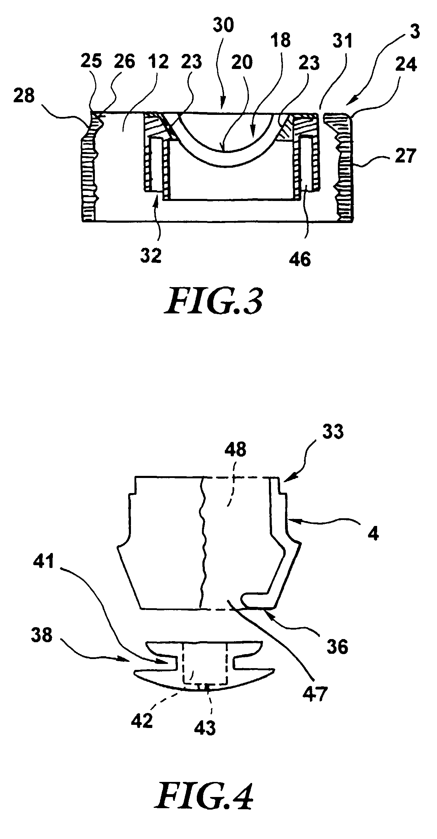

Am unteren Ende des Expansionsstopfens 4 ist ein mit diesem lösbar verbundener Gegenspanneinsatz 38 angeordnet, siehe Figur 4.

Bei einem weiteren Ausführungsbeispiel der Erfindung ist der Expansionsstopfen 4 an seinem unteren Ende 36, siehe Figur 4, geschlossen, und statt eines Gegenspanneinsatzes 38 weist der Expansionsstopfen ein einteilig mit ihm ausgebildetes unteres Ende auf. Dieses ist ebenfalls aus einem elastischen Material gleich oder ähnlich zum Material des Expansionsstopfens gebildet. Dieses einteilig mit dem Stopfen ausgebildete untere Ende kann bei dem weiteren Ausführungsbeispiel in im wesentlichen Entlastungsstellung 7 des Expansionsstopfens 4 die obere Öffnung 2 des Flüssigkeitsbehälters abdichten. Dabei kann diese obere Öffnung 2 als kreisförmige Öffnung direkt unterhalb des Expansionsstopfens angeordnet sein, wobei das untere Ende des Expansionsstopfens mit einem Öffnungsrand dieser oberen Öffnung in Dichtanlage bringbar ist.

Wird der Expansionsstopfen in seine Spreizstellung 6 verstellt, so wird bei dem weiteren Ausführungsbeispiel die Öffnung 2 geöffnet und eine Fluidverbindung über einen entsprechenden Fluidkanal zwischen oberer Öffnung 2 und Ausgießöffnung 12 im Verschlußdeckel 3 oder mit einer anderen, nicht dargestellten Ausgießöffnung im Flüssigkeitsbehälter freigegeben.

In Figur 1 ist eine solche obere Öffnung gestrichelt dargestellt und mit Bezugszeichen 2', 2'' versehen. Eine entsprechende Ausgießöffnung kann beispielsweise im Halsbereich 40 des Isoliergefäßes 1 oberhalb der oberen Öffnung 2', 2'', im Verschlußdeckel 3, siehe Figur 2 oder auch durch zwei sich bei auf dem Isoliergefäß aufgeschraubtem Verschlußdeckel 3 überdeckende Öffnungen des Halsbereichs 40 und im Außenumfang 27 der Schraubkappe 3 ausgebildet sein. Der Expansionsstopfen kann in diesem Fall die Öffnung 2', 2'' mit seiner Umfangsfläche und/oder seiner Unterseite abdichten.

Figur 2 ist eine Draufsicht auf die Schraubkappe 3 nach Figur 1.

Zur Vereinfachung ist die Betätigungseinrichtung 5 nicht dargestellt.

In einer Oberseite 22 der Schraubkappe ist eine Ausgießöffnung 12 angeordnet, durch die beispielsweise Flüssigkeit aus dem Isoliergefäß über die obere Öffnung 2, siehe Figur 1, und durch die Ausgießöffnung 12 ausgießbar ist. Zwischen Ausgießöffnung 12 und einer Randkante 24 der Deckeloberseite 22 beziehungsweise der Schraubkappe 3 verläuft eine in Richtung Randkante ansteigende Ausfließschräge 26. Diese endet in einer Tropfkante 25, die im wesentlichen einen Teil der Randkante 24 bildet. An die Tropfkante 25 schließt sich in Richtung Isoliergefäß 1 nach unten eine Nut 28 im Außenumfang der Schraubkappe 3 an, die einseitig in die Tropfkante übergeht.

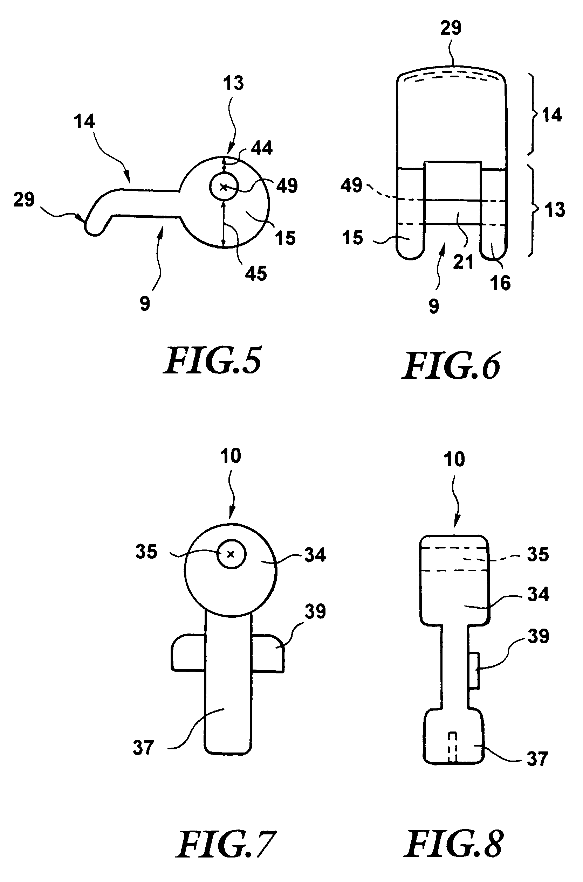

In der Deckeloberseite 22 ist weiterhin eine Durchtrittsöffnung 30 angeordnet. Diese ist im wesentlichen rechteckförmig und weist entlang zweier Seiten Armaufnahmen 17, 18 mit zugehörigen Lagerflächen 19, 20 und entlang der anderen Rechteckseiten Rückhalteschrägen 23 auf. Die Armaufnahmen 17, 18 dienen zur verschwenkbaren Lagerung des Lagerabschnitts 13, siehe auch Figuren 3, 5 und 6. Die Rückhalteschrägen 23 dienen zum Rückhalt eines mit dem Hebel 9 bewegungsverbundenen Stößels, siehe Figuren 7 und 8.

Im Inneren der Schraubkappe 3 ist ein Aufnahmering 32 angeordnet, der die Durchtrittsöffnung 30 umgibt und der zur Aufnahme eines Anlageendes 33 des Expansionsstopfens 4 dient, siehe auch Figuren 3 und 4.

Gegenüberliegend zur Ausgießöffnung 12 ist in der Deckeloberseite 22 eine Belüftungsbohrung 31 angeordnet. Weiterhin ergibt sich in Zusammenschau mit Figur 1, daß die Nut 28 zur zumindest teilweisen Aufnahme eines nach unten in Richtung Isoliergefäß 1 umgebogenen freien Endes 29 des Hebels 9 dient, der sowohl die Ausgießöffnung 12 überdeckt, als auch die Tropfkante 25 umgreift.

In Figur 3 ist ein Schnitt entlang der Linie III-III aus Figur 2 dargestellt. Gleiche Bezugszeichen kennzeichnen gleiche Teile nach Figuren 1 und 2 und werden nur noch teilweise erwähnt.

Der Aufnahmering 32 ist von unten an der Oberseite 22, siehe Figur 2, und innerhalb der Schraubkappe 3 angeordnet. In den entsprechenden Ringspalt 46 des Aufnahmerings 32 ist das Anlageende 33, siehe Figur 4, zumindest teilweise und abdichtend einschiebbar.

Radial nach innen vom Aufnahmering 32 stehen die Rückhalteschrägen 23 ab und zwischen diesen sind die von der Deckeloberseite nach unten ins Innere der Schraubkappe 3 abstehende Armaufnahmen sichtbar, von denen die Armaufnahmen 18 mit teilkreisförmiger Lagerfläche 20 dargestellt ist.

Der Aufnahmering 32 bildet weiterhin einen Rand der Ausgießöffnung 12 gegenüberliegend zu Ausfließschräge 26 und Tropfkante 25.

In Figur 4 ist in teilweise geschnittener Seitenansicht der Expansionsstopfen 4 und der von diesem getrennte Gegenspanneinsatz 38 dargestellt.

Der Expansionsstopfen 4 weist das Anlageende 33 und gegenüberliegend ein Zugende 36 auf. Das Zugende 36 wird im wesentlichen durch einen radial nach innen zu einer Bodenöffnung 47 verlaufenden Randflansch gebildet, der in einen Einsteckring 41 des Gegenspanneinsatzes 38 einsetzbar ist. Das Anlageende 33 umrandet eine obere Öffnung 48. Der dargestellte Expansionsstopfen 4 ist schlauchförmig und weist eine in etwa zylindrische obere Hälfte und eine in etwa kegelstumpfförmige untere Hälfte auf. Bei anderen Ausführungsbeispielen des Expansionsstopfens kann dieser auch als Formteil ausgebildet sein, das beispielsweise ohne zusätzlichen Gegenspanneinsatz direkt mit dem Stößel, siehe Figuren 7 und 8, lösbar verbunden ist.

Im Gegenspanneinsatz 38 ist in etwa mittig eine Aufnahmevertiefung 42 angeordnet, in die ein Fußteil 37 des Stößels, siehe Figuren 7 und 8, einsetzbar und beispielsweise mittels einer durch eine Bohrung 43 durchgeführten Schraube mit dem Gegenspanneinsatz lösbar verbunden ist.

In Figur 5 ist eine Seitenansicht auf den Hebel 9 nach Figur 1 dargestellt.

Der Hebel 9 weist einen Betätigungsabschnitt 14 und einen direkt daran anschließenden Lagerabschnitt 13 auf, siehe auch Figur 6. Der Lagerabschnitt 13 ist im Querschnitt im wesentlichen kreisförmig und weist exentrisch eine Bohrung 49 auf. Diese ist im Abstand 44, beziehungsweise 45 zu Ober-, beziehungsweise Unterkante des Lagerabschnitts 13 angeordnet. Die Differenz zwischen dem Abstand 45 und 44 ergibt den Hub des Stößels 10, siehe Figuren 7, 8 und 1, zwischen der Spreizstellung und der Entlastungsstellung des Expansionsstopfen.

In Figur 6 ist eine Draufsicht auf den Hebel 9 nach Figur 5 dargestellt. Der Lagerabschnitt 13 ist gabelförmig mit zwei Gabelarmen 15, 16 ausgebildet, die entsprechend auf den Lagerflächen 19, 20 der Armaufnahmen 17, 18, siehe Figur 2, gelagert sind. Zwischen den Gabelarmen 15, 16 ersteckt sich der Lagerbolzen 21, der an beiden Enden in entsprechende Bohrungen 49 in jedem der Gabelarme eingesteckt ist. Der Lagerbolzen 21 ist exzentrisch relativ zu den im Querschnitt im wesentlichen kreisförmigen Gabelarm 15, 16, siehe Figur 5, angeordnet.

In Figur 7 ist der Stößel 10 dargestellt, der mittels eines im Querschnitt im wesentlichen kreisförmigen Kopfteils 34 mit exzentrisch in diesem angeordneter Lagerbohrung 35 zwischen den beiden Gabelarmen 15, 16, siehe Figur 6, am Lagerbolzen 21 verschwenkbar gelagert ist. An das Kopfteil 34 schließt sich ein in einem Fußteil 37 endender Schaft an. Dieser trägt etwa mittig zwischen Kopfteil und Fußteil eine Zentriereinrichtung 39. Die Länge der Zentriereinrichtung 39 quer zum Stößel 10 entspricht im etwa der Länge einer Diagonalen der Durchtriffsöffnung 30 und ist größer als der Abstand der Rückhalteschrägen 23 nach Figur 3.

In Figur 8 ist eine Hinteransicht des Stößels 10 nach Figur 7 dargestellt. Fußteil 37 weist einen im wesentlichen kreisförmigen Querschnitt auf und ist passend zur Aufnahmevertiefung 42 im Gegenspanneinsatz 38, siehe Figur 4, ausgebildet. Im Fußteil 37 ist eine Blindbohrung ausgebildet, in die durch Bohrung 43 des Gegenspanneinsatzes 38, siehe Figur 4, beispielsweise eine Schraube zur lösbaren Befestigung des Gegenspanneinsatzes am Stößel 10 einschraubbar ist. Stößel 10 und Gegenspanneinsatz 38 können auch einteilig hergestellt sein.

Bei dem erfindungsgemäßen Isoliergefäß und der beschriebenen Betätigungseinrichtung 5 für den Expansionsstopfen 4 ergibt sich, daß keine im Isoliergefäß 1 enthaltene Flüssigkeit durch die Betätigungseinrichtung fließt und daher eine Reinigung der Schraubkappe leicht möglich ist. Zusätzliche Dichtungen zwischen Halsbereich 40 und Schraubkappe 3 oder zwischen Expansionsstopfen 4 und Betätigungseinrichtung 5 sind nicht notwendig. Der Expansionsstopfen 4 dichtet in seiner Spreizstellung 6 sicher das Isoliergefäß 1 in seinem Halsbereich 40 relativ zur Ausgießöffnung 12 in der Schraubkappe 3 ab.

Ein Ausgießen von Flüssigkeit ist durch die Anordnung der Ausgießöffnung 12 direkt durch die Schraubkappe 3 möglich, wobei durch die Tropfkante 25 und die Ausfließschräge 26 ein Flüssigkeitsstrahl erzeugt wird, der in optimaler Weise abreißt.

Durch die außermittige Lagerung des Hebels 9 in der Schraubkappe 3 ist außerdem sichergestellt, daß nur in Spreizstellung 6 des Expansionsstopfens 4 ein Becher auf das Isoliergefäß zusätzlich aufschraubbar ist, wobei der Hebel 9 in Entlastungsstellung des Expansionsstopfens 4, siehe Figur 1, ein solches Aufschrauben durch seinen Überstand über den Außenumfang 27 der Schraubkappe 3 verhindert.

Der Expansionsstopfen 4 ist nach Figur 4 im wesentlichen schlauchförmig. Bei weiteren Ausführungsbeispielen der Erfindung kann der Expansionsstopfen auch als Formteil ausgebildet und beispielsweise direkt mit dem Fußteil des Stößels durch Verrasten oder anderes lösbares Verbinden, beispielsweise Verschrauben, verbunden sein. Weiterhin kann der Expansionsstopfen auch einteilig mit dem Stößel gebildet sein.

## Patentansprüche

1. Flüssigkeitsbehälter, insbesondere Isoliergefäß (1) mit einer oberen Öffnung (2) und einem auf diese aufsetzbaren Verschlußdeckel (3), in welchem ein elastisch spreizbarer Expansionsstopfen (4) mittels einer mit diesem bewegungsverbundenen Betätigungseinrichtung (5) zwischen einer Spreizstellung (6) und einer Entlastungsstellung (7) verstellbar gelagert ist,
**dadurch gekennzeichnet**,
daß die Betätigungseinrichtung (5) einen am Verschlußdeckel (3) verschwenkbar gelagerten Hebel (9) und einen mit dem Expansionsstopfen (4) lösbar verbundenen, exzentrisch zur Lagerung des Hebels (9) mit diesem bewegungsverbundenen Stößel (10) aufweist.

2. Flüssigkeitsbehälter nach Anspruch 1,
**dadurch gekennzeichnet**,
daß der Expansionsstopfen (4) in seiner Spreizstellung (6) in dichtende Anlage mit einer Innenfläche (8) des Flüssigkeitsbehälters (1) ist.

3. Flüssigkeitsbehälter nach Anspruch 2,
**dadurch gekennzeichnet**,
daß der Flüssigkeitsbehälter (1) eine doppelwandige Isolierflasche ist, auf derem oberen Ende (11) der als Schraubkappe ausgebildete Verschlußdeckel (3) aufschraubbar ist, wobei in der Schraubkappe (3) eine Ausgießöffnung (12) ausgebildet ist.

4. Flüssigkeitsbehälter nach einem der vorangehenden Ansprüche,
**dadurch gekennzeichnet**,
daß das obere Ende (11) der Isolierflasche ein Außengewinde aufweist.

5. Flüssigkeitsbehälter nach einem der vorangehenden Ansprüche,
**dadurch gekennzeichnet**,
daß dieser aus einem oder einer Kombination der folgenden Materialien gebildet ist: Metall, insbesondere Stahl und Aluminium, Kunststoff und Glas.

6. Flüssigkeitsbehälter nach wenigstens einem der vorangehenden Ansprüche,
**dadurch gekennzeichnet**,
daß der Hebel (9) ein einarmiger Hebel mit einem Lagerabschnitt (13) zur Lagerung am Verschlußdeckel (3) und einem Betätigungsabschnitt zum Verschwenken des Hebels durch einen Benutzer ist.

7. Flüssigkeitsbehälter nach wenigstens einem der vorangehenden Ansprüche,
**dadurch gekennzeichnet**,
daß der Lagerabschnitt (13) gabelförmig mit zwei Gabelarmen (15, 16) ausgebildet ist, welche in entsprechenden Gabelarmaufnahmen (17, 18) des Verschlußdeckels (3) verschwenkbar gelagert sind.

8. Flüssigkeitsbehälter nach wenigstens einem der vorangehenden Ansprüche,
**dadurch gekennzeichnet**,
daß die Gabelarme (15, 16) im Querschnitt im wesentlichen kreisförmig sind.

9. Flüssigkeitsbehälter nach wenigstens einem der vorangehenden Ansprüche,
**dadurch gekennzeichnet**,
daß die Gabelarmaufnahmen (17, 18) zumindest teilkreisförmige Lagerflächen (19, 20) aufweisen.

10. Flüssigkeitsbehälter nach wenigstens einem der vorangehenden Ansprüche,
**dadurch gekennzeichnet**,
daß ein Lagerbolzen (21) sich im wesentlichen senkrecht zu den Gabelarmen (15, 16) erstreckt und exzentrisch von diesen gehalten ist, wobei der Stößel (10) am Lagerbolzen (21) verschwenkbar gelagert ist.

11. Flüssigkeitsbehälter nach wenigstens einem der vorangehenden Ansprüche,
**dadurch gekennzeichnet**,
daß der Betätigungsabschnitt (14) in Spreizstellung (6) des Expansionsstopfens (4) auf einer im wesentlichen ebenen Deckeloberseite (22) des Verschlußdeckels (3) aufliegt.

12. Flüssigkeitsbehälter nach wenigstens einem der vorangehenden Ansprüche,
**dadurch gekennzeichnet**,
daß der Betätigungsabschnitt (14) in Spreizstellung (6) des Expansionsstopfens (4) die Ausgießöffnung (12) abdeckt.

13. Flüssigkeitsbehälter nach wenigstens einem der vorangehenden Ansprüche,
**dadurch gekennzeichnet**,
daß der Ausgießöffnung (12) eine durch eine Randkante (24) des Verschlußdeckels (3) gebildete Tropfkante (25) zugeordnet ist.

14. Flüssigkeitsbehälter nach wenigstens einem der vorangehenden Ansprüche,
**dadurch gekennzeichnet**,
daß zwischen Ausgießöffnung (12) und Tropfkante (25) eine nach unten in Richtung Flüssigkeitsbehälter (1) geneigte Ausfließschräge (26) angeordnet ist.

15. Flüssigkeitsbehälter nach wenigstens einem der vorangehenden Ansprüche,
**dadurch gekennzeichnet**,
daß die Ausgießöffnung (12) in einem am Verschlußdeckel (3) angeordneten Mundstück ausgebildet ist.

16. Flüssigkeitsbehälter nach wenigstens einem der vorangehenden Ansprüche,
**dadurch gekennzeichnet**,
daß im Außenumfang (27) des Verschlußdeckels (3) zumindest im Bereich der Tropfkante (25) eine konvex gekrümmte Nut (8) ausgebildet ist, die einseitig in die Tropfkante übergeht.

17. Flüssigkeitsbehälter nach wenigstens einem der vorangehenden Ansprüche,
**dadurch gekennzeichnet**,
daß ein freies Ende (29) des Betätigungsabschnitts (14) nach unten in Richtung Flüssigkeitsbehälter (1) gekrümmt ist, welches freie Ende die Tropfkante (25) in Spreizstellung (6) des Expansionsstopfens (4) überdeckt und zumindest teilweise in die Nut (28) eingreift.

18. Flüssigkeitsbehälter nach wenigstens einem der vorangehenden Ansprüche,
**dadurch gekennzeichnet**,
daß die Lagerflächen (19, 20) der Gabelarmaufnahmen (17, 18) seitlich zu einer Durchtrittsöffnung (30) im Verschlußdeckel (3) in diesem ausgebildet und nach oben zur Deckeloberseite (22) offen sind.

19. Flüssigkeitsbehälter nach wenigstens einem der vorangehenden Ansprüche,
**dadurch gekennzeichnet**,
daß benachbart zur Randkante (24) der Deckeloberseite (22) und gegenüberliegend zur Ausgießöffnung (12) eine Belüftungsbohrung (31) im Verschlußdeckel (3) angeordnet ist.

20. Flüssigkeitsbehälter nach wenigstens einem der vorangehenden Ansprüche,
**dadurch gekennzeichnet**,
daß die Durchtrittsöffnung (30) zwischen Ausgießöffnung (12) und Belüftungsbohrung (31) angeordnet ist.

21. Flüssigkeitsbehälter nach wenigstens einem der vorangehenden Ansprüche,
**dadurch gekennzeichnet**,
daß im Verschlußdeckel (3) ein die Durchtrittsöffnung (30) im wesentlichen umgebender Aufnahmering (32) zur Aufnahme eines Anlageendes (33) des Expansionsstopfens (4) angeordnet ist.

22. Flüssigkeitsbehälter nach wenigstens einem der vorangehenden Ansprüche,
**dadurch gekennzeichnet**,
daß der Stößel (10) ein im Querschnitt im wesentlichen kreisförmiges, zwischen den Gabelarmen (15, 18) anordbares Kopfteil (34) aufweist, in dem exzentrisch eine Lagerbohrung (35) für den Lagerbolzen (21) ausgebildet ist.

23. Flüssigkeitsbehälter nach wenigstens einem der vorangehenden Ansprüche,
**dadurch gekennzeichnet**,
daß der Stößel (10) ein mit einem Zugende (36) des Expansionsstopfens (4) lösbar verbundenes Fußteil (37) aufweist.

24. Flüssigkeitsbehälter nach wenigstens einem der vorangehenden Ansprüche,
**dadurch gekennzeichnet**,
daß der Expansionsstopfen (4) im wesentlichen schlauchförmig ist.

25. Flüssigkeitsbehälter nach wenigstens einem der vorangehenden Ansprüche,
**dadurch gekennzeichnet**,
daß der Expansionsstopfen (4) als mit dem Fußteil (37) des Stößels (10) lösbar verbundenes Formteil ausgebildet ist.

26. Flüssigkeitsbehälter nach wenigstens einem der vorangehenden Ansprüche,
**dadurch gekennzeichnet**,
daß am Zugende (36) des Expansionsstopfens (4) ein mit dem Fußteil (37) des Stößels (10) lösbar verbundener Gegenspanneinsatz (38) angeordnet ist.

27. Flüssigkeitsbehälter nach wenigstens einem der vorangehenden Ansprüche,
**dadurch gekennzeichnet**,
daß am Stößel (10) eine Zentriereinrichtung (39) zum Zentrieren des Stößels relativ zur Durchtrittsöffnung (30) und/oder zum Aufnahmering (32) angeordnet ist.

28. Flüssigkeitsbehälter nach wenigstens einem der vorangehenden Ansprüche,
**dadurch gekennzeichnet**,
daß der Expansionsstopfen (4) an seinem unteren Zugende (36) geschlossen ist.

29. Flüssigkeitsbehälter nach wenigstens einem der vorangehenden Ansprüche,
**dadurch gekennzeichnet**,
daß im wesentlichen das Zugende (36) in Entlastungsstellung (7) des Expansionsstopfens (4) mit der oberen Öffnung (2) in abdichtender Anlage ist und in Spreizstellung (6) ein Fluidkanal zwischen oberer Öffnung (2) und Ausgießöffnung (12) im Verschlußdeckel (3) freigegeben ist.
